Europäisches Patentamt

European Patent Office

Office européen des brevets

(19)

(11) Publication number: **0 102 689**

**A2**

(12) **EUROPEAN PATENT APPLICATION**

(21) Application number: **83303300.4**

(22) Date of filing: **08.06.83**

(51) Int. Cl.³: **H 02 M 3/155**

(30) Priority: **12.07.82 US 397268**

(43) Date of publication of application:
**14.03.84 Bulletin 84/11**

(84) Designated Contracting States:
**DE FR GB**

(71) Applicant: **Hewlett-Packard Company**
**3000 Hanover Street**
**Palo Alto California 94304(US)**

(72) Inventor: **Cordy, Clifford B., Jr.**
**1250 NW 23rd**
**Corvallis Oregon 97330(US)**

(74) Representative: **Oliver, Peter Anthony**
**Hewlett-Packard Limited Nine Mile Ride Easthampstead**
**Wokingham, Berkshire RG11 3LL(GB)**

(54) **Constant volt-second regulator apparatus.**

(57) Voltage regulator apparatus is disclosed which utilizes the stored charge on the intrinsic gate capacitance of a field effect transistor as the means to switch the power in a switch mode voltage regulator in conjunction with a constant volt-second regulator, where the stored charge is derived from the timing capacitor.

FIGURE 5

EP 0 102 689 A2

1
CONSTANT VOLT-SECOND REGULATOR APPARATUS

This invention is concerned with constant volt-second regulator apparatus.

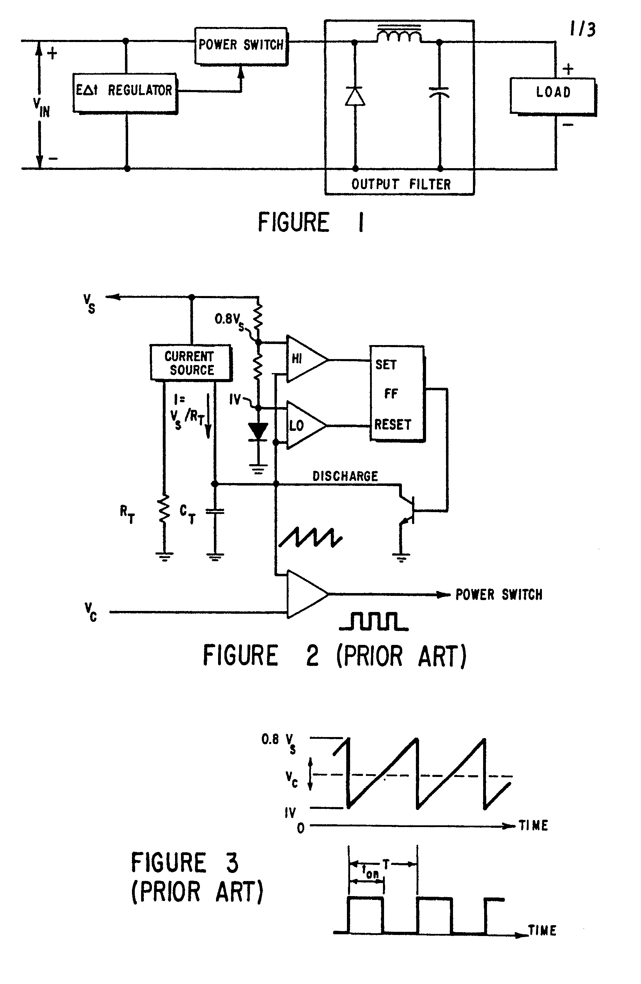

The purpose of a voltage regulator apparatus is to provide a constant DC output voltage independent of the input voltage. One approach to this is to chop the input voltage in such a way that as the input voltage goes·up, the duty cycle of the chopper is reduced so that the product of the two is kept constant. This chopped voltage is then filtered, producing a DC output voltage. The output voltage is then equal to the product of the input voltage and the duty cycle. This is achieved by apparatus comprising a constant volt-second regulator, or $E\Delta t$ regulator, and power switch arrangement. A simple block diagram of a typical volt-second regulator circuit implementation is shown in Figure 1.

A description of a prior art constant volt-second regulator for use in such a circuit appears below. The basic circuit described is shown in Figure 2 and the timing diagram therefor in Figure 3. As the timing capacitor, $C_T$, charges up past some reference voltage, $V_C$, the comparator driving the power switch turns off. The time required to charge $C_T$ to $V_C$ where $V_S$ is the unregulated input supply voltage is

$$t_{ON} = \frac{CV_C R_T}{V_S} = \frac{K_1}{V_S}.$$

The cycle time is $T = .8 \, CV_S R_T/V_S = K_2$. Thus, the duty cycle = $K_3/V_S$ and the product of duty cycle and input voltage is $K_3$. The circuit as shown does not exactly obey this relationship because of the voltage offset of the diode. This is done as a simple means of avoiding the requirement that the comparators work with a zero input.

Note that: (1) The duty cycle timing and the full cycle timing are both performed by the same capacitor $C_T$; (2) The sense level, $V_C$, is constant; and (3) The peak capacitor voltage is proportional to $V_S$.

The advantage of this prior circuit is that it provides a semi-regulated output (±several percent) over a wide range of input voltage without the need for a high gain feedback loop and all its associated complexity.

Unfortunately, this circuit, and those using feedback, share the disadvantage of needing low power supplies to continuously drive the regulator circuit and the power switch. These supplies must be in operation before the main regulator will function and become a major part of the overall cost and complexity of the entire regulator apparatus.

The present invention provides a direct-current voltage regulator apparatus for regulating an input voltage and comprising a source of a reference voltage; a constant volt-second regulator; a power switch; an output filter coupled to said power switch to produce a direct-current output voltage; the apparatus being characterized in that the constant volt-second regulator comprises first timing means ($C_1$) for defining the full cycle time of the regulator, and second timing means ($C_2$) for defining the duty cycle time of the regulator.

In apparatus as set forth in the last preceding paragraph, it is preferred that the first timing means comprises a capacitor     coupled so as to be chargeable to a constant peak voltage level for controlling the power switch.

The present invention further provides a direct current voltage regulator apparatus for regulating an input voltage and comprising a source of a reference voltage; a constant volt-second regulator; a power switch; an output filter coupled to said power switch to produce a direct-current output voltage; the apparatus being characterized in that the constant volt-second regulator comprises a first, full cycle timing capacitor; a first current source coupled to charge said full cycle timing capacitor; a first switch coupled so as to close when the voltage on the full cycle timing capacitor is equal to or greater than the reference voltage and to open when the full cycle timing capacitor is discharged; discharge means coupled to the output of the first switch; a second duty cycle timing capacitor; a second current source for providing a current proportional to the direct current input voltage and coupled to charge the duty cycle timing capacitor; a second switch coupled so as to close when the voltage on the duty cycle timing capacitor is equal to or greater than the reference voltage and to open when the duty cycle timing capacitor is discharged; said power switch having a control terminal and capacitance associated with said control terminal; and the regulator further comprising a first unidirectionally conductive element coupled between the output of the first switch and the power switch control terminal; a second unidirectionally conductive element coupled between the associated capacitance and the second switch; a third unidirectionally conductive element coupled between the duty cycle capacitor and the second switch; and a third switch coupled to close and shunt the duty cycle capacitor when the third capacitor is charged and to open when the third capacitor is discharged.

In apparatus as set forth in the last preceding paragraph, it is preferred that the reference voltage source comprises a third current source coupled to the source of the input voltage; and a reference diode coupled to the third current source.

In apparatus as set forth in either one of the last two immediately preceding paragraphs, it is preferred that each of the first or second switches comprises a pair of transistors and a diode coupled so as to operate in avalanche discharge mode.

In apparatus as set forth in any one of the last three immediately preceding paragraphs, it is preferred that the third switch comprises an open collector output transistor; an inverting transistor having a load terminal, coupled to the open collector output transistor, and a control terminal; a collector resistor coupled to the load terminal of the inverting transistor; and a control resistor coupled to the control terminal of the inverting transistor.

In apparatus as set forth in any one of the last four immediately preceding paragraphs, it is preferred that the discharge means comprises an inductor; a fourth unidirectionally conductive device coupled to the inductor; and a damping resistor coupled between the fourth unidirectionally conductive device and the full cycle timing capacitor.

In apparatus as set forth in any one of the last seven immediately preceding paragraphs, it is preferred that the power switch comprises a metal oxide semiconductor field effect transistor having a control terminal.

In apparatus as set forth in the last preceding paragraph, it is preferred that the control terminal has

5

intrinsic capacitance associated therewith.

The present invention further provides a voltage
regulator switch comprising a metal oxide semiconductor
field effect transistor switch, said switch having an
intrinsic gate capacitance on which a pulse of electric
energy can be stored to turn on and keep on said switch,
and which, when discharged, will turn said switch off.

In accordance with the illustrated preferred
embodiments, the present invention provides for utilizing
a power MOSFET as a drive switch in a switch mode power
supply so that it is no longer necessary to supply
continuous drive to the power switch.   It is sufficient
to deliver an energy pulse to charge the input capacitance
of the FET to turn it on and the FET can then be ignored
by the regulator until such time that the state of the FET
should be changed.   The charge in the gate capacitance
of the FET can·then be dumped and the FET will stay off.
This method of running a FET switch is combined with a
charge transfer drive in a constant volt-second regulator
forming a novel low power dissipation, highly efficient
power supply capable of implementation without the need
of any low power supplied to drive the regulator circuit
or the power switch.

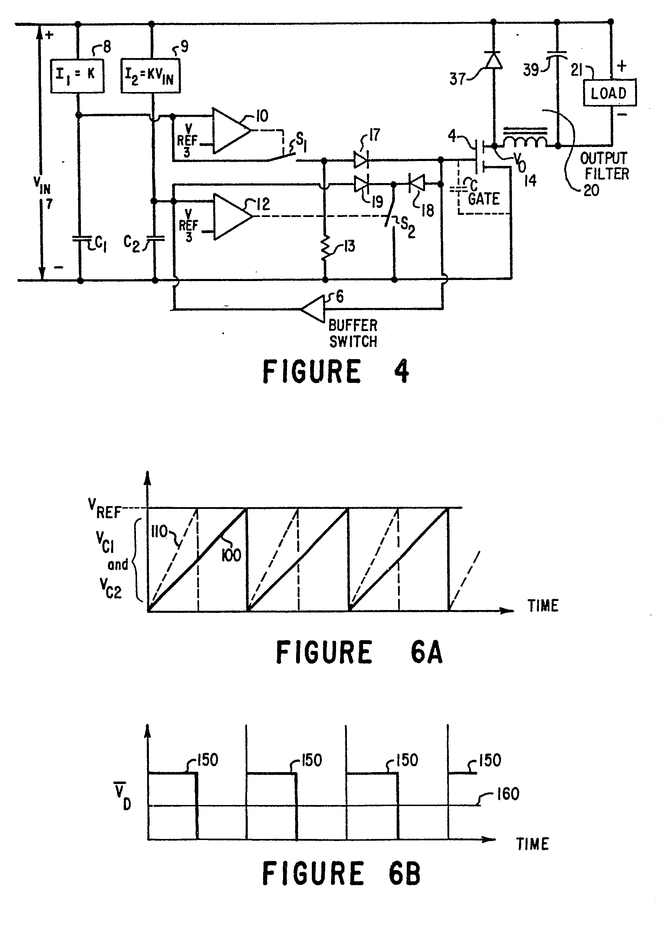

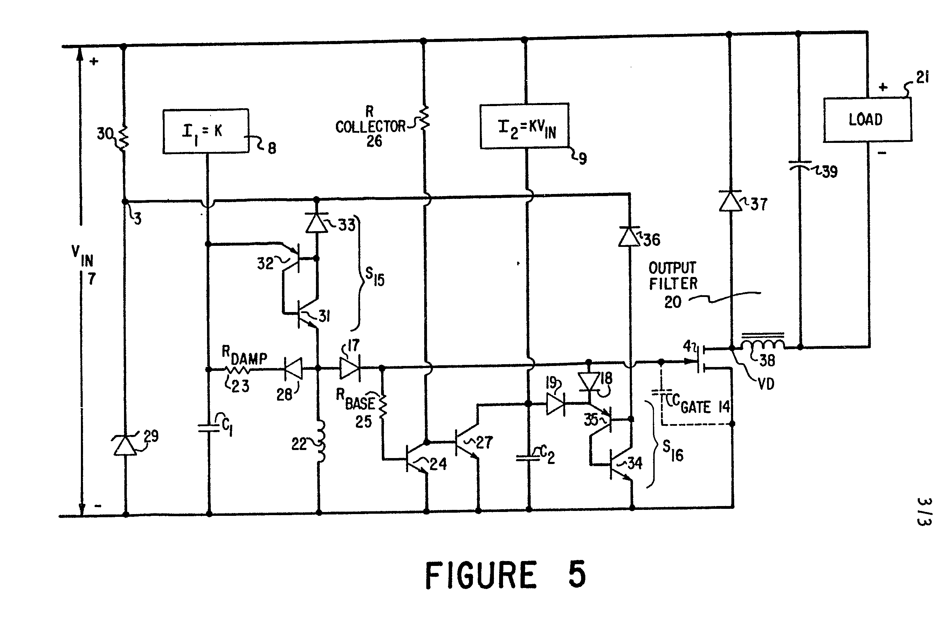

There now follows a detailed description which is
to be read with reference to the Figures 4, 5, 6 and 6A
of the accompanying drawings, of apparatus according to
the invention; it is to be clearly understood that this
apparatus has been selected for description to illustrate
the invention by way of example and not by way of limitation.

In these Figures:-

Figure 4 is a circuit diagram of one embodiment
of charge transfer constant volt-second regulator apparatus
according to the invention, with the full cycle and duty
cycle functions split between two capacitors;

Figure 5 is a circuit diagram of a second embodi-

ment of apparatus according to the invention, similar to that of Figure 4 but operating from the supply lines without the need for any low voltage supplies;

Figure 6A is a timing diagram for the circuits of Figures 4 and 5 showing the voltages on the full cycle and duty cycle capacitors; and

Figure 6B is a timing diagram for the circuits of Figures 4 and 5 showing the inverse of the output of the power switch.

With the advent of power MOSFETs, a new option is open to the power supply designer. It is no longer necessary to supply continuous drive to the power switch, as is required with bipolar switches; it is sufficient to deliver an energy pulse to charge the input capacitance of the FET to turn it on. The FET can then be ignored by the regulator until such time that the state of the FET should be changed. The charge in the input capacitance of the FET can then be dumped and the FET will stay off.

The constant volt-second regulator has a readily available charge source for driving the FET -- the charged capacitor $C_T$ of Figure 2. This is not immediately usable for two reasons. Firstly, there is no direct connection between the capacitor $C_T$ and the power switch. Secondly, the peak voltage on the capacitor $C_T$ is directly proportional to $V_S$ which is unacceptable from the point of view of the FET. These two problems can be solved if they are approached in reverse order.

As pointed out in the discussion of the operation of the standard constant volt-second regulator, the duty cycle timing and the full cycle timing are both performed by the capacitor $C_T$. The "cost" of this union is the variability of the peak voltage of the capacitor $C_T$. Splitting the two functions between two capacitors $C_1$ and $C_2$, as shown in Figure 4, allows the design of a circuit in which the timing capacitors charge to constant peak voltages.    This voltage may be the same for the two capacitors but this is not necessary.

The cycle time is defined by the capacitor $C_1$. This charges from the current source 8 at a constant rate until it reaches the reference voltage 3.    Its charge is then dumped into a resistor 13 and the gate capacitance 14 of the FET 4 through a first switch $S_1$, which switch is closed only briefly.

When the gate capacitance 14 of the FET 4 is charged, a buffer switch 6 allows the capacitor $C_2$ to start charging from a second current source 9 which is proportional to $V_{IN}7$.    The capacitor $C_1$ also starts charging.    The voltage on the capacitor $C_2$ reaches $V_{REF}3$ in a time inversely proportional to $V_{IN}7$, at which time its charge and the charge of the gate capacitance 14 of the FET 4 are dumped to ground through a second switch $S_2$ as determined by a comparator 12.    Rectifiers 17, 18, and 19 are used to prevent current from flowing backwards into the capacitor $C_1$, gate capacitor 14, and capacitor $C_2$ respectively.    Finally an output filter 20 is provided to supply a direct current voltage to the load 21.    Due to the polarity of available FETs, the power switch 4 is in the negative supply line.    There is no fundamental requirement for this.    The entire circuit could be built in complementary form.

The actual switching of the switches $S_1$ and $S_2$ can be implemented in a wide variety of ways.    A simple means is to use transistor pairs operated in an avalanche discharge mode as shown in Figure 5 as $S_{15}$ and $S_{16}$, comprising transistors 31 and 32 and a diode 33, and transistors 34 and 35 and a diode 36, respectively.

The entire circuit of Figure 5 is shown operating from the supply lines with no low voltage supplies necessary. Looking at Figure 5 in conjunction with the timing diagrams of Figures 6A and 6B, a reference voltage 3 is shown generated from $V_{IN}7$ by a reference diode 29 and a resistor 30, as before and the full cycle capacitor $C_1$ is charged from a first current sorce 8, and a second current source 9 is used to charge the duty cycle capacitor $C_2$. The capacitor $C_1$ charges at a constant rate independently of the input voltage 7 until it reaches the voltage $V_{REF}3$. The switch $S_{15}$ then turns on and the charge on the capacitor $C_1$ is dumped through an inductor 22. On the reverse half cycle, the switch $S_{15}$ is reverse biased and thus turns off. The damping resistor 23 is such that the oscillation on the reverse half cycle is critically damped, leaving the voltage on the capacitor $C_1$ at zero volts at the end of the discharge cycle. A fourth rectifier 28 is provided so that the charge on the capacitor $C_1$ will not discharge through the inductor 22.

When the instrinsic gate capacitance 14 of the FET 4 is charged, an inverting transistor 24, biased by a base resistor 25, turns on pulling down on the collector resistor 25 and turning the open collector output transistor 27 off; the capacitor $C_2$ is thus allowed to charge. The capacitor $C_2$ charges from the second current source 9 at a rate proportional to $V_{IN}7$ until the voltage on the capacitor $C_2$ reaches $V_{REF}3$. The switch $S_{16}$ is then turned on and the charge on both the capacitor $C_2$ and the intrinsic gate capacitance 14 is dumped. Once the charge on the capacitor $C_2$ and the intrinsic gate capacitance 14 has been dumped there is no remaining current source for the switch $S_{16}$, and the switch $S_{16}$ will automatically turn off.

In Figure 6A, the voltage on the full cycle capacitor $C_1$ is shown as a solid line 100. If $V_{IN}7$ is just equal to the desired voltage on the load 21, the relation between the capacitor $C_1$, the capacitor $C_2$, the current source 8, and the current source 9 is such that the capacitor $C_2$ charges at the same rate as the capacitor $C_1$; the intrinsic gate capacitance 14 is dumped instantaneously and the

FET 4 is on at all times. The result is that in Figure 6A the voltage on the duty cycle capacitor $C_2$ will overlay the solid line 100 that shows the voltage on the full cycle capacitor $C_1$. If on the other hand the voltage $V_{IN}7$ is twice as high as the desired load voltage, the voltage on the capacitor $C_2$ charges twice as fast as shown by the dashed curve 110 while the voltage on the capacitor $C_1$ remains as shown by the solid line 100 and the FET 4 is on only half of the time. A similar situation occurs for $V_{IN}7$ which is any other multiple of the desired load voltage and the duty cycle is reduced proportionately. The voltage on the power terminal $V_D$ of the power switch provided by the FET 4, shown inverted as $\overline{V}_D$ in Figure 6B when $V_{IN}7$ is twice as high as the desired load voltage, has a duty cycle 150 proportional to the period on the capacitor $C_2$. When this waveform is integrated by the output filter 20 (which comprises a diode 37, a coil 38 and a capacitor 39) as shown by line 160, the output voltage to the load 21 is independent of the input voltage $V_{IN}7$.

Supplies have been built using the disclosed invention that will deliver over 100 watts (2 amps at 50 volts regulated) with $V_{IN}$ varying between 100 and 400 volts and with less than 1 watt dissipated in the entire regulator circuit, even at 400 volts input.

CLAIMS

1. A direct-current voltage regulator apparatus for regulating an input voltage and comprising:

a source of a reference voltage;

a constant volt-second regulator;

a power switch;

an output filter coupled to said power switch to produce a direct-current output voltage;

the apparatus being characterized in that the constant volt-second regulator comprises first timing means $(C_1)$ for defining the full cycle time of the regulator, and second timing means $(C_2)$ for defining the duty cycle time of the regulator.

2. Apparatus according to claim 1 characterized in that the first timing means comprises:

a capacitor $(C_1)$ coupled so as to be chargeable to a constant peak voltage level for controlling the power switch.

3. A direct-current voltage regulator apparatus for regulating an input voltage and comprising:

a source of a reference voltage;

a constant volt-second regulator;

a power switch;

an output filter coupled to said power switch to produce a direct-current output voltage;

the apparatus being characterized in that the constant volt-second regulator comprises a first, full cycle timing capacitor $(C_1)$;

a first current source (8) coupled to charge said full cycle timing capacitor;

a first switch $(S_1)$ coupled so as to close when the voltage on the full cycle timing capacitor is equal to or greater than the reference voltage and to open when the full cycle timing capacitor is discharged;

discharge means (13; 22,23,28) coupled to the output of the first switch;

a second duty cycle timing capacitor $(C_2)$;

a second current source (9) for providing a current proportional to the direct current input voltage and coupled to charge the duty cycle timing capacitor;

a second switch $(S_2)$ coupled so as to close when the voltage on the duty cycle timing capacitor is equal to or greater than the reference voltage and to open when the duty cycle timing capacitor is discharged;

said power switch having a control terminal and capacitance associated with said control terminal;

and the regulator further comprising

a first unidirectionally conductive element (17) coupled between the output of the first switch and the power switch control terminal;

a second unidirectionally conductive element (18) coupled between the associated capacitance and the second switch;

a third unidirectionally conductive element (19) coupled between the duty cycle capacitor and the second switch; and

a third switch (6) coupled to close and shunt the duty cycle capacitor when the third capacitor is charged and to open when the third capacitor is discharged.

4.    Apparatus according to claim 3, characterized in that the reference voltage source comprises

a third current source (30) coupled to the source of the input voltage; and

a reference diode (29) coupled to the third current source.

5. Apparatus according to either one of claims 3 and 4 characterized in that each of the first or second switches comprises

a pair of transistors (31,32;34,35) and a diode (33;36) coupled so as to operate in avalanche discharge mode.

6. Apparatus according to any one of claims 3 to 5 characterized in that the third switch comprises

an open collector output transistor (27);

an inverting transistor (24) having a load terminal, coupled to the open collected output transistor, and a control terminal;

a collected resistor (26) coupled to the load terminal of the inverting transistor; and

a control resistor (25) coupled to the control terminal of the inverting transistor.

7. Apparatus according to any one of claims 3 to 6 characterized in that the discharge means comprises

an inductor (22);

a fourth unidirectionally conductive device (23) coupled to the inductor; and

a damping resistor (23) coupled between the fourth unidirectionally conductive device and the full cycle timing capacitor.

8. Apparatus according to any one of the preceding claims characterized in that the power switch comprises

a metal oxide semiconductor field effect transistor having a control terminal.

9.    Apparatus according to claim 8 characterized in that the control terminal has intrinsic capacitance associated therewith.

10.    A voltage regulator switch comprising a metal oxide semiconductor field effect transistor switch (4), said switch having an intrinsic gate capacitance (14), on which a pulse of electric energy can be stored to turn on and keep on said switch, and which, when discharged, will turn said switch off.

FIGURE I

FIGURE 2 (PRIOR ART)

FIGURE 3
(PRIOR ART)

FIGURE 4

FIGURE 6A

FIGURE 6B

FIGURE 5

0102689